# FASCICULE DE BREVET EUROPEEN

(11) **EP 0 948 072 B1**
(45) Date de publication et mention de la délivrance du brevet: **25.06.2003**
(21) Numéro de dépôt: 98105758.1
(22) Date de dépôt: 30.03.1998
(51) Int. Cl.: H01M 10/04

(54) **Accumulateur ou pile prismatique à enroulement bobiné**
Prismatische aufladbare oder primäre Zelle mit Wicklung montiert auf Spulenkörper
Prismatic rechargeable or primary cell with bobbin mounted coil

(43) Date de publication de la demande: 06.10.1999
(73) Titulaire: Renata AG, 4452 Itingen (CH)
(72) Inventeur: Wyser, Paul Julian, 9050 Appenzell (CH)
(74) Mandataire: Thérond, Gérard Raymond

(56) Documents cités:
- FR-A- 2 528 631
- GB-A- 1 144 438
- US-A- 5 658 683
- PATENT ABSTRACTS OF JAPAN vol. 008, no. 235 (E-275), 27 octobre 1984 & JP 59 117076 A (SANYO DENKI KK), 6 juillet 1984,
- PATENT ABSTRACTS OF JAPAN vol. 007, no. 004 (E-151), 8 janvier 1983 & JP 57 163965 A (SANYO DENKI KK), 8 octobre 1982,

## Description

La présente invention concerne un accumulateur ou une pile prismatique, désigné par la suite par le terme générique de "batterie", que cette source d'énergie soit rechargeable ou non. L'invention concerne plus particulièrement une telle batterie dans laquelle la source d'énergie est formée d'un enroulement de matériaux actifs de type "jelly roll".

Dans les appareils portables, tels que les téléphones mobiles, les batteries de forme prismatique sont généralement préférées à celles de forme bâton notamment pour réduire la taille de l'appareil dans son ensemble. Ces appareils portables, incorporent généralement des circuits et des composants électroniques fragiles et souvent exigeants du point de vue de la consommation d'énergie. Il est donc souhaitable que les batteries prismatiques utilisées dans de tels appareils possèdent une grande densité d'énergie, qu'elles aient un coût de fabrication le moins élevé possible, qu'elles aient une longévité suffisante notamment dans le cas d'accumulateurs et qu'elles présentent à l'emploi toutes les garanties nécessaires du point de vue sécurité, tant vis-à-vis de l'utilisateur que vis-à-vis des circuits électroniques contigus.

La présente invention a pour but de procurer une batterie prismatique qui ait une grande densité volumique d'énergie, un coût de fabrication moins élevé que les batteries prismatiques de l'art antérieur grâce à une nouvelle conception de l'enroulement de type "jelly roll", et qui permette aussi d'accroître la sécurité d'emploi.

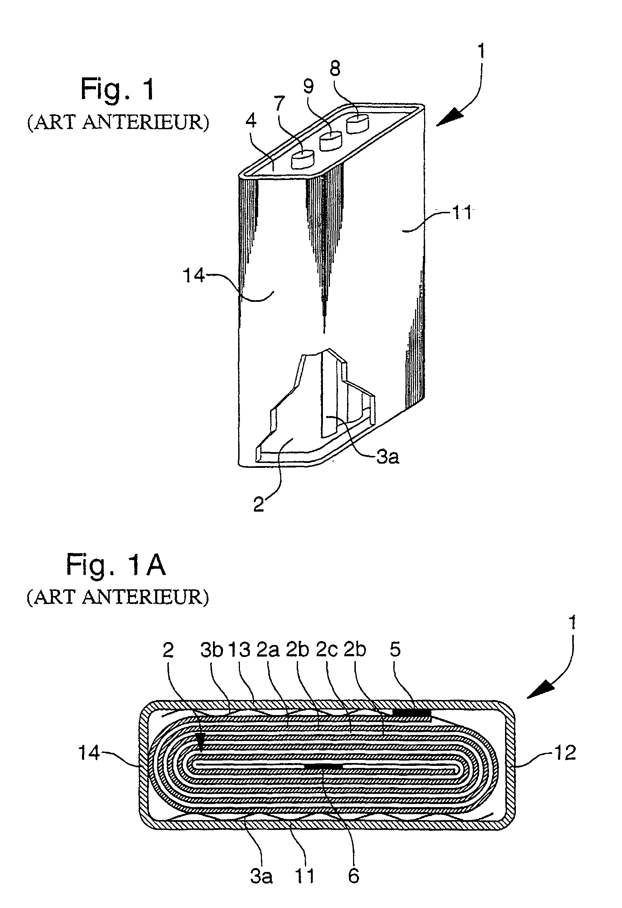

Les batteries prismatiques de l'art antérieur, schématiquement représentées aux figures 1 et 1A sont constituées par un container métallique 1 de forme parallélépipédique, à l'intérieur duquel on a placé un enroulement 2 spiral non circulaire, dit de type "jelly roll", qu'on a ensuite imprégné d'un électrolyte. On observera que, pour obtenir la plus grande densité d'énergie possible, c'est-à-dire pour pouvoir introduire dans le container la plus grande quantité possible de matériaux actifs, il est impératif que l'électrolyte soit ajouté après la mise en place de l'enroulement 2 en raison des phénomènes de gonflement. Cet enroulement, qui est obtenu à partir d'une bande composite comprenant une couche d'un matériau actif formant l'anode 2a, un séparateur poreux 2b, une couche d'un matériau actif formant la cathode 2c et un deuxième séparateur poreux 2b, ne permet pas d'obtenir un positionnement précis des zones de connexion électrique de l'anode 2a et de la cathode 2c. Il est dès lors nécessaire de prévoir des moyens de connexion 5, 6 intermédiaires entre lesdites zones de connexion et des contacts extérieurs 7, 8, situés par exemple sur le capot 4 hermétiquement scellé au container 1. Ces moyens de connexion 5, 6 intermédiaires doivent être soudés à l'intérieur du container, ce qui permet difficilement d'en contrôler la qualité. Chaque soudure supplémentaire représente en effet un risque de dysfonctionnement, soit en raison de chocs mécaniques durant l'utilisation, soit en raison des tensions mécaniques qui vont s'exercer après le montage, notamment lors des cycles de charge/décharge pour un accumulateur. Cet enroulement "jelly roll" est généralement maintenu comprimé par exemple au moyen de deux lames élastiques ondulées 3a, 3b, disposées entre les grandes parois du container 1 et ledit enroulement 2. Ces lames élastiques permettent aussi d'absorber les petites variations de volume de l'enroulement 2 lors des cycles de charge/décharge. Ce type de batterie prismatique, notamment dans le cas d'un accumulateur comporte en outre généralement un évent de sécurité schématiquement représenté en 9. Cet évent de sécurité 9 est en effet nécessaire compte tenu des réactions chimiques qui se produisent et qui peuvent provoquer une élévation de la pression et/ou de la température.

L'enroulement "jelly roll" présente des avantages concernant la densité de courant théoriquement disponible, mais impose de prendre un certain nombre de précautions, tant au niveau de sa fabrication qu'au niveau de sa mise en place dans le container métallique. En effet, pour avoir une densité de courant maximum, il est important que l'enroulement ait une bonne cohésion en tout point, c'est-à-dire que toutes les couches alternées de matériaux actifs et de séparateurs soient parfaitement en contact entre elles. Ce résultat est facilement obtenu pour la partie rectiligne de l'enroulement grâce aux moyens de compression, par exemple au moyen des lames élastiques 3a, 3b. Pour les parties courbes à chaque extrémité, la cohésion dépend essentiellement du procédé de fabrication. En l'état actuel de la technique, un enroulement "jelly roll" est obtenu en effectuant d'abord un enroulement sur un noyau cylindrique qui est ensuite retiré avant d'exercer une compression pour lui donner une forme ellipsoïdale adaptée à l'ouverture du container. Pour diminuer les dislocations observées dans les parties courbes de l'enroulement "jelly roll" lorsqu'on utilise un noyau cylindrique, le brevet US 5,658,683 propose d'utiliser un noyau sensiblement rhombique. Dans tous les cas l'enroulement obtenu doit être manipulé avec précaution pour être introduit dans le container en même temps que les lames élastiques. Dans une production en série il sera donc nécessaire de disposer d'automates perfectionnés, ce qui aura une influence sur le coût unitaire du produit final.

Le but de la présente invention est de pallier les inconvénients susmentionnés en procurant une batterie prismatique dans laquelle un enroulement bobiné de type "jelly roll", permet de disposer, avec un coût de fabrication réduit, d'une grande densité d'énergie, d'une fiabilité et d'une longévité accrues, ainsi qu'une plus grande sécurité d'emploi lorsque l'enroulement bobiné est associé à un container de forme particulière.

A cet effet l'invention a pour objet une batterie prismatique comprenant un container métallique formé au moins de deux grandes parois, de deux petites parois et d'un fond délimitant une cavité à l'intérieur de laquelle est disposé un enroulement spiral non circulaire d'au moins une bande composite pour former des spires successives comprenant une anode et une cathode séparées par des séparateurs poreux, l'ensemble étant imprégné d'un électrolyte, ledit container étant obturé à sa partie supérieure par un capot scellé supportant deux contacts reliés électriquement à l'anode et à la cathode par l'intermédiaire de moyens de connexion, caractérisée en ce que ledit enroulement spiral est formé autour d'une bobine rigide comprenant un plateau supérieur horizontal, ayant sensiblement les dimensions de l'ouverture de la cavité, et un plateau inférieur horizontal, ayant sensiblement les dimensions intérieures du fond, lesdits plateaux étant réunis par un isthme central vertical et , de part et d'autre, par deux isthmes latéraux, lesdits isthmes délimitant deux ouvertures dans la partie médiane de la bobine et un espace libre à sa périphérie pour loger l'enroulement spiral.

Une batterie prismatique du type qui vient d'être décrit peut être pourvue de moyens de connexion usuels, tels qu'une bande ou un fil conducteur souple disposé, soit à chaque extrémité de l'enroulement, soit entre les ouvertures délimitées par les isthmes. Selon un autre aspect de l'invention, lesdits moyens de connexion sont formés par deux tiges ou tubes métalliques disposées entre les ouvertures, aplaties dans leur partie située entre les deux plateaux et dont une extrémité traverse le plateau supérieur à travers des orifices ménagés dans celui-ci.

Selon un autre aspect de l'invention le positionnement axial desdites tiges ou desdits tubes est également obtenu grâce à des orifices situés dans le plateau inférieur pour recevoir l'autre extrémité de chaque tige ou tube.

Selon encore un autre aspect de l'invention les plateaux supérieur et inférieur sont en outre pourvus d'orifices de positionnement au droit des isthmes latéraux et de part et d'autre du plan médian de la bobine, lesdits orifices étant prévus pour la mise en place de tiges de positionnement pendant le bobinage de l'enroulement. Une fois l'enroulement obtenu, les tiges de positionnement sont retirées; ce qui permet de supprimer toute tension mécanique sur les points de soudure entre les tiges ou tubes métalliques et l'anode et la cathode.

L'invention a également pour objet une batterie prismatique comprenant dans un container métallique un enroulement bobiné du type qui vient d'être décrit, ledit container ayant ses grandes parois déformées en creux par estampage après mise en place de la bobine, de façon à produire un pincement du plateau inférieur. En pareil cas le plateau inférieur aura une largeur plus grande que celle du plateau supérieur. Une telle construction contribue à accroître la sécurité d'emploi d'une telle batterie.

L'invention a également pour objet des batteries prismatiques présentant divers modes d'enroulement d'une ou de plusieurs bandes composites selon la composition desdites bandes et leur mode de fixation sur les moyens de connexion et sur les isthmes de la bobine.

D'autres caractéristiques et avantages de la présente invention apparaîtront dans la description suivante en référence aux dessins annexés dans lesquels.
- les figures 1 et 1A représentent en perspective et en coupe transversale une batterie prismatique de l'art antérieur;
- la figure 2 représente en perspective éclatée une batterie prismatique selon l'invention;
- les figures 3 et 3a représentent en perspective partiellement arrachée et en coupe transversale un container particulier adapté à la bobine.
- la figure 4 est une vue en coupe selon un plan parallèle à la base de la batterie d'un premier mode d'enroulement autour de la bobine;
- la figure 5 est une vue en coupe selon un plan parallèle à la base de la batterie d'un deuxième mode d'enroulement autour de la bobine; et
- la figure 6 est une vue en coupe selon un plan parallèle à la base de la batterie d'un troisième mode d'enroulement autour de la bobine.

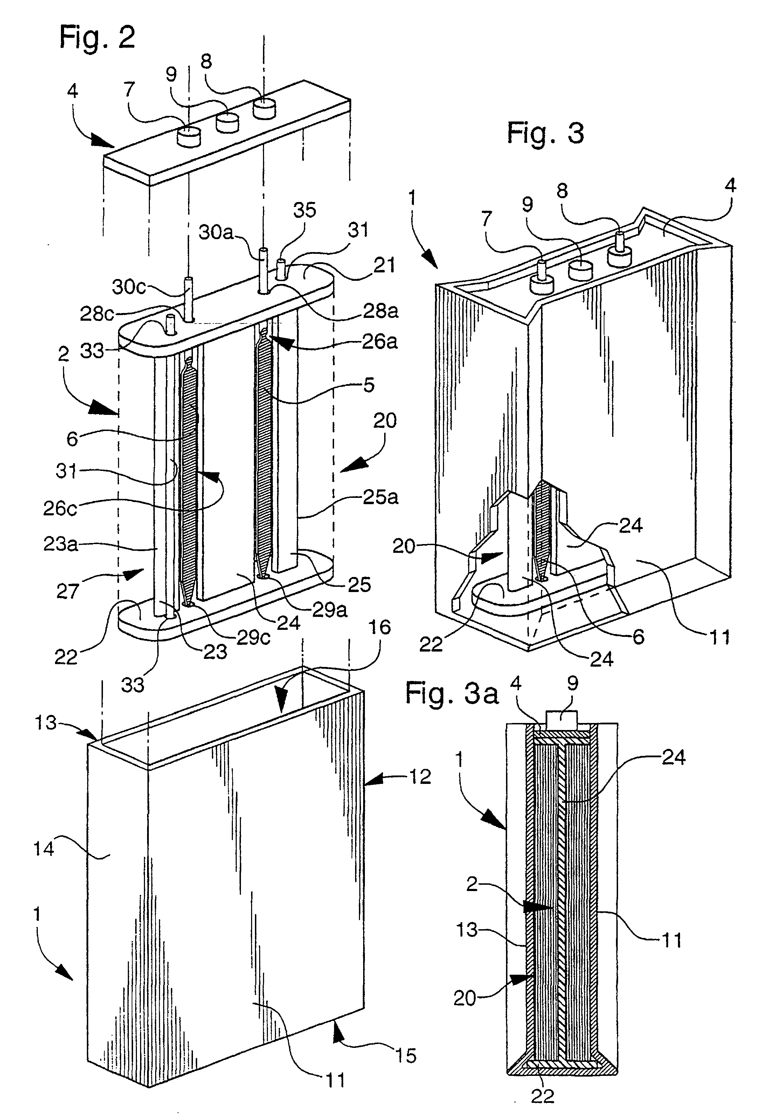

Les figures 1 et 1A ayant déjà été décrites en préambule comme représentatives de l'état de la technique, on considère maintenant la figure 2 qui représente en perspective éclatée les trois parties essentielles d'une batterie prismatique, à savoir le container métallique 1, l'enroulement spiral 2 et le capot 4. Le container 1 est formé d'un élément tubulaire, comprenant deux grandes parois 11, 13 et deux petites parois 12, 14. Le container 1 est fermé à sa partie inférieure par un fond rectangulaire 15, délimitant une cavité 16 destinée à recevoir un enroulement spiral 2 de matériau actif de type "jelly roll", imprégné d'un électrolyte, l'ensemble étant ensuite scellé hermétiquement par le capot 4 soudé au container, et sur lequel sont prévus des contacts 7, 8 et généralement un évent de sécurité 9.

Comme on l'a indiqué, une des difficultés est d'obtenir un enroulement spiral 2 parfaitement compact sans tension mécanique au niveau des soudures des moyens de connexion et sans risque de dislocation dans les parties courbes. A cet effet on forme l'enroulement 2 sur une bobine 20 en un matériau rigide isolant comprenant un plateau supérieur 21 et un plateau inférieur 22 ayant tous les deux sensiblement les dimensions de l'ouverture du container 1, avec de préférence des angles arrondis pour faciliter la mise en place dans la cavité 16. Ces deux plateaux 21, 22 sont réunis par trois isthmes 23, 24, 25, perpendiculaires à leur plan selon le grand axe desdits plateaux, c'est-à-dire selon le plan médian de la bobine 20. Les isthmes 23, 24, 25 délimitent dans la partie centrale deux ouvertures 26a, 26c et à la périphérie un espace libre 27 destiné à recevoir l'enroulement 2. Dans le mode de réalisation préféré, représenté à la figure 2, la bobine 20 présente une symétrie axiale, l'isthme central 24 ayant une plus grande largeur que les isthmes latéraux 23, 25.

Dans l'axe des ouvertures 26a, 26c, le plateau supérieur 21 est pourvu d'orifices 28a, 28c et le plateau inférieur 22 d'orifice 29a, 29c, lesdits orifices étant prévus pour le passage et le positionnement des moyens de connexion 5, 6 entre l'enroulement 2 et les contacts 7, 8. Dans le mode de réalisation préféré, représenté à la figure 2, ces moyens de connexion sont constitués par des tiges métalliques, 30a, 30c par exemple en cuivre pour l'anode et en aluminium pour la cathode, lesdites tiges étant aplaties dans leur partie comprise entre le plateau supérieur 21, d'où elle émergent à travers les orifices 28a, 28c pour former les contacts extérieur 7, 8, et le plateau inférieur 22, dans lequel elles sont positionnées grâce aux orifices 29a, 29c. Comme on le verra par la suite, les trois isthmes et les parties aplaties des deux tiges 30a, 30c permettent de fixer, selon différentes variantes le début d'une ou de plusieurs bandes composites. Dans le mode de réalisation préféré, la bobine est également pourvue d'un dispositif permettant de supprimer toute tension mécanique au niveau des soudures entre l'anode 2a et la cathode 2c de l'enroulement 2 et les moyens de connexion 5, 6, c'est-à-dire les parties aplaties des tiges 30a, 30c. Ce dispositif consiste en des orifices de positionnement 33, 35 pratiqués dans le plateau supérieur 21 et dans le plateau inférieur 22, et disposés sensiblement au milieu des isthmes latéraux 23, 25, de part et d'autre du plan médian. Ces orifices 33, 35 sont destinés à recevoir des tiges de positionnement 31 mises en place lorsqu'on commence à effectuer l'enroulement. L'enroulement peut être effectué de façon tendue, ce qui permet d'obtenir une parfaite cohésion entre les différentes spires de l'enroulement. Une fois l'enroulement terminé, les tiges de positionnement 31 sont retirées, ce qui supprime la tension au niveau des soudures et laisse même un certain jeu pour qu'il ne se produise aucune tension mécanique, par exemple lors des opérations de charge/décharge pour un accumulateur. La bobine 20 est réalisée par exemple en matière plastique, tel que le polybutylène téréphtalate (PBT), par moulage par injection. Elle peut également être réalisée en tout autre matériau isolant thermoplastique ou thermodurcissable stable dans l'électrolyte utilisé. Dans une batterie prismatique ayant sensiblement comme dimensions extérieures 48 x 34 x 10 mm, une épaisseur de 0,8 à 1 mm convient pour former en PBT les plateaux 21, 22 et les isthmes 23, 24, 25 en donnant à la bobine une rigidité suffisante. Afin de ne pas blesser l'enroulement 2 dans les parties distales de la bobine, et notamment pour les premiers spires, on observera qu'on peut donner une forme arrondie aux bords externes 23a, 25a des isthmes latéraux.

En se référant maintenant aux figures 3 et 3A on voit que l'enroulement 2 sur la bobine 20 est placé dans un container 1 de forme générale prismatique, mais dont les grandes parois 11, 13 ont été déformées en creux par estampage, ce qui, entre autres conséquences, produit un pincement du plateau inférieur 22 de la bobine (visible sur la figure 3A). Il est alors nécessaire que la largeur du plateau supérieur 21 soit plus petite pour s'adapter à la largeur de l'ouverture du container 1. Une telle conception associant un des éléments de construction de la bobine à une forme particulière du container 1 contribue à accroître la sécurité d'emploi d'une bobine de ce type par une fixation mécanique évitant des tractions sur les contacts ou les électrodes par exemple en cas de chocs.

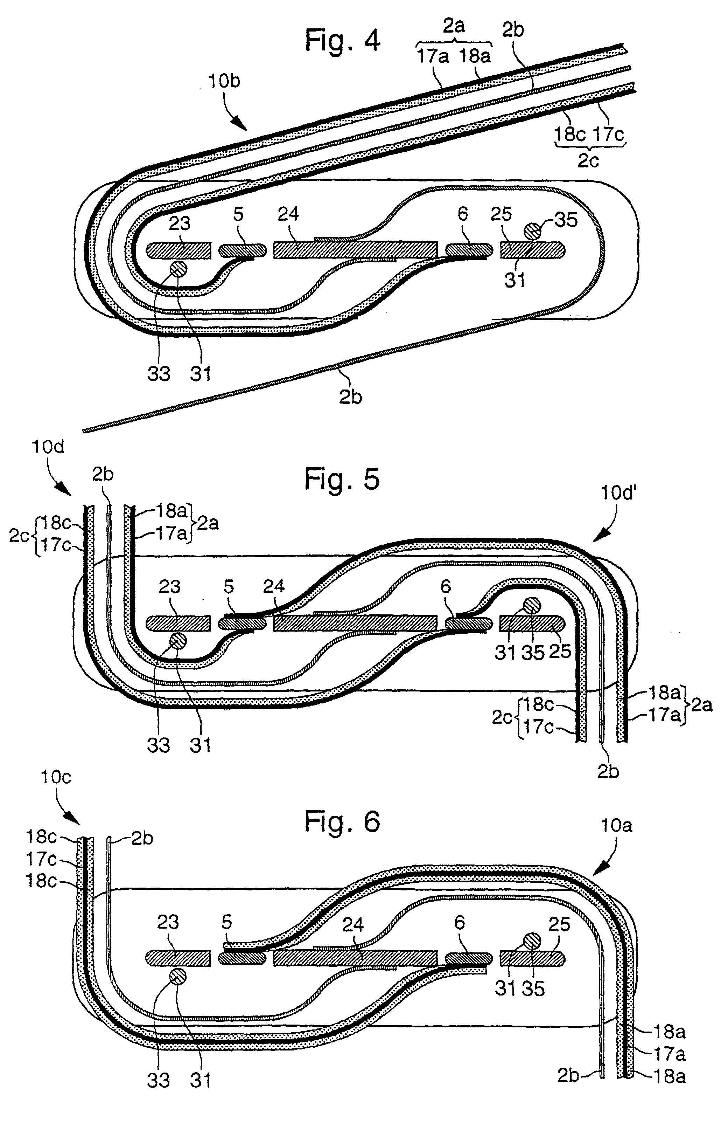

En se référant maintenant aux figures 4, 5, 6 on décrit ci-après trois modes d'enroulement rendus possibles par l'utilisation de la bobine qui vient d'être décrite comme noyau central.

A la figure 4 l'enroulement est effectué à partir d'une bande composite 10b comprenant de part et d'autre d'un premier séparateur poreux 2b deux supports 17a, 17c dont les faces en regard sont revêtues de matériaux actifs 18a, 18c formant respectivement l'anode 2a et la cathode 2c, l'ensemble ainsi formé ayant sur l'une de ses surfaces externes un deuxième séparateur poreux 2b. Pour former l'anode on utilisera par exemple une mince feuille de cuivre revêtue d'un matériau actif formant l'anode et pour la cathode une mince feuille d'aluminium revêtue d'un matériau actif formant la cathode. A une extrémité de la bande on sépare l'anode 2a, la cathode 2c et le premier séparateur 2b qu'on positionne d'un même côté de la bobine 20 pour pouvoir respectivement souder les électrodes sur les parties aplaties des tiges de connexion 5, 6 et coller le premier séparateur 2b sur l'isthme central 24. Le deuxième séparateur 2b est positionné de l'autre côté de la bobine et collé soit sur l'isthme central 24, soit sur celui des isthmes latéraux 23 ou 25 qui se trouve dans le sens de l'enroulement, de façon à isoler les électrodes de polarité contraire lors du passage de la première spire.

Dans le mode de réalisation représenté à la figure 5 l'enroulement 2 sur la bobine 20 est formé à partir de deux bandes composites 10d et 10d', ayant la même structure, positionnées de part et d'autre de la bobine, de façon à pouvoir être enroulées toutes les deux dans le même sens. Chaque bande 10d et 10d' comprend de part et d'autre d'un séparateur 2b deux supports 17a, 17c dont les faces en regard sont revêtues de matériaux actifs 18a, 18c formant respectivement l'anode 2a et la cathode 2c. Les extrémités de chaque bande 10d, 10d' sont fixées de part et d'autre de la bobine 20 par soudage aux moyens de connexion respectifs pour l'anode 2a et la cathode 2c, et par collage sur l'isthme central 24 pour les séparateurs 2b. Comme on peut le comprendre, l'enroulement va positionner l'un contre l'autre les supports respectifs 17a, 17c de chaque bande 10d, 10d'.

Dans un troisième mode de réalisation représenté à la figure 6 l'enroulement 2 sur la bobine 20 est formé à partir de deux bandes composites 10a, 10c ayant des structures analogues, positionnées de part et d'autre de la bobine de façon à pouvoir être enroulées toutes les deux dans le même sens. Une première bande 10a comprend un support 17a, revêtu sur ses deux faces d'un matériau actif 18a formant l'anode 2a, et un séparateur poreux 2b. De même, une deuxième bande 10c comprend un support 17c, revêtu sur ses deux faces d'un matériaux actif 18c formant la cathode 2c. Comme précédemment, l'anode 2a et la cathode 2c sont soudées à leurs moyens de connexion respectifs 5, 6 et les séparateurs à l'isthme central 24. Cette construction offre l'avantage de procurer une plus grande densité massique d'énergie car ce type d'électrode ne comporte qu'un seul support (aluminium et cuivre).

Les modes de réalisation décrits ci-dessus, tant au niveau de la réalisation de la bobine qu'au niveau des modes d'enroulement, sont susceptibles d'être adaptés par l'homme de l'art à la forme spécifique d'une batterie, sans sortir du cadre de la présente invention.

## Revendications

1. Batterie prismatique comprenant un container (1) métallique formé au moins de deux grandes parois (11, 13), de deux petites parois (12, 14) et d'un fond (15) délimitant une cavité (16) à l'intérieur de laquelle est disposé un enroulement spiral non circulaire (2) d'au moins une bande composite (10a, 10b, 10c, 10d) pour former des spires successives comprenant une anode (2a) et une cathode (2c) séparées par des séparateurs (2b) poreux, l'ensemble étant imprégné d'un électrolyte, ledit container (1) étant obturé à sa partie supérieure par un capot (4) scellé supportant deux contacts (7, 8) reliés électriquement à l'anode (2a) et à la cathode (2c) par l'intermédiaire de moyens de connexion (5, 6), **caractérisée en ce que** ledit enroulement spiral (2) est formé autour d'une bobine rigide (20) comprenant un plateau supérieur (21) horizontal, ayant sensiblement les dimensions de l'ouverture de la cavité (16), et un plateau inférieur (22) horizontal, ayant sensiblement les dimensions intérieures du fond (15), lesdits plateaux étant réunis par un isthme central (24) vertical et , de part et d'autre, par deux isthmes latéraux (23, 25), lesdits isthmes (23, 24, 25) délimitant deux ouvertures (26a, 26c) dans le plan médian de la bobine (20) et un espace libre (27) à sa périphérie pour loger l'enroulement spiral (2).

2. Batterie prismatique selon la revendication 1, **caractérisée en ce que** les moyens de connexion (5, 6) sont disposés dans les ouvertures (26a, 26c) ménagées entre les isthmes (23, 24, 25).

3. Batterie prismatique selon les revendications 1 et 2, **caractérisée en ce que** le plateau supérieur (21) de la bobine (20) comporte en outre des orifices (28a, 28c), ménagés entre l'isthme central (24) et chaque isthme latéral (23, 25), et **en ce que** les moyens de connexion (5, 6) sont formés par des tiges métalliques (30a, 30c), aplaties dans leur partie comprise entre les deux plateaux (21, 22), et faisant saillie à l'extérieur de la bobine (20) à travers lesdits orifices (28a, 28c) pour former les contacts (7, 8).

4. Batterie prismatique selon la revendication 3, **caractérisée en ce que** le plateau inférieur (22) comporte également des orifices (29a, 29c) permettant de positionner les tiges métalliques (30a, 30c).

5. Batterie prismatique selon la revendication 1, **caractérisée en ce que** les bords extérieurs (23a, 25a) des isthmes latéraux (23, 25) sont arrondis selon un rayon de courbure suffisant pour permettre un passage non destructif des premières spires de l'enroulement (2).

6. Batterie prismatique selon la revendication 1, **caractérisée en ce que** le plateau supérieur (21) et le plateau inférieur (22) sont en outre respectivement pourvus d'orifices de positionnement (33, 35) situés au niveau des isthmes latéraux (23, 25) et disposés de part et d'autre du plan médian de la bobine (20), lesdits orifices (33, 35) étant prévus pour recevoir des tiges de positionnement (31) devant être retirée après bobinage de l'enroulement (2).

7. Batterie prismatique selon la revendication 1, **caractérisée en ce que** l'enroulement (2) est formé d'une seule bande composite (10b) comprenant de part et d'autre d'un premier séparateur (2b) deux supports (17a, 17c) dont les faces en regard sont revêtues de matériaux actifs (18a, 18c) formant respectivement l'anode (2a) et la cathode (2c), l'ensemble ainsi formé ayant sur l'une de ses surfaces externes un deuxième séparateur (2b), et **en ce que** d'une part, l'anode (2a), la cathode (2c) et le premier séparateur (2b) sont positionnés d'un même côté de la bobine (20) en étant solidaire respectivement des moyens de connexion (5, 6) par soudage et de l'isthme central (24) par collage, et d'autre part le deuxième séparateur est collé de l'autre côté de la bobine (20) sur l'isthme central (24), ou sur celui des isthmes latéraux (23 ou 25) se trouvant dans le sens de l'enroulement.

8. Batterie prismatique selon la revendication 1, **caractérisée en ce que** l'enroulement (2) est formé de deux bandes composites (10d, 10d') ayant la même structure et comprenant de part et d'autre d'un séparateur (2b) deux supports (17a, 17c) dont les faces en regard sont revêtues de matériaux actifs (18a, 18c) formant respectivement l'anode (2a) et la cathode (2c) et **en ce que** chaque bande composite (10d, 10d') est fixée de part et d'autre de la bobine (20) par soudage aux moyens de connexion respectifs (5, 6) pour l'anode (2a) et la cathode (2c) et par collage sur l'isthme central (24) pour les séparateurs (2b), les deux bandes (10d, 10d') étant enroulées dans le même sens pour venir en contact l'une avec l'autre par leurs faces non revêtues de matériaux actifs (18a, 18c).

9. Batterie prismatique selon la revendication 1, **caractérisée en ce que** l'enroulement (2) est formé de deux bandes composites (10a, 10c) ayant des structures analogues, la première bande (10a) comprenant un support (17a), revêtu sur ses deux faces d'un matériau actif (18a) formant l'anode (2a), et un séparateur (2b) solidaires d'un même côté de la bobine respectivement d'un moyen de connexion (5) par soudage et de l'isthme central (24) par collage, et la deuxième bande (10c) comprenant un support (17c), revêtu sur ses deux faces d'un matériau actif (18c) formant la cathode (2c), et un séparateur (2b) solidaires de l'autre côté de la bobine respectivement du deuxième moyen de connexion (6) par soudage et de l'isthme central (24) par collage, les deux bandes (10a, 10c) étant enroulées dans le même sens pour venir en regard l'une de l'autre.

10. Batterie prismatique selon la revendication 1, **caractérisée en ce que** la largeur du plateau inférieur (22) de la bobine (20) est plus grande que celle du plateau supérieur (21) pour permettre son pincement au fond de la cavité (16) du container (1) par déformation en creux des grandes parois (11, 13).

11. Batterie prismatique selon la revendication 1, **caractérisée en ce que** la bobine (20) est réalisée en un matériau isolant choisi parmi le PBT (polybutylène téréphtalate), et les matériaux isolant thermoplastiques ou thermodurcissables.

## Patentansprüche

1. Prismaförmige Batterie, die einen metallischen Behälter (1) umfaßt, der aus wenigstens zwei großen Wänden (11, 13), zwei kleinen Wänden (12, 14) und einem Boden (15) gebildet ist und einen Hohlraum (16) begrenzt, in dessen Innenraum eine nicht kreisförmige, spiralförmige Wicklung (2) aus wenigstens einem Verbundwerkstoffband (10a, 10b, 10c, 10d) angeordnet ist, das aufeinanderfolgende Windungen bildet, mit einer Anode (2a) und einer Katode (2c), die durch poröse Trennelemente (2b) getrennt sind, wobei die Gesamtheit mit einem Elektrolyten getränkt ist, wobei der Behälter (1) in seinem oberen Teil durch eine gekapselte Haube (4) verschlossen ist, die zwei Kontakte (7, 8) trägt, die mit der Anode (2a) bzw. mit der Katode (2c) über Anschlußmittel (5, 6) elektrisch verbunden sind, **dadurch gekennzeichnet, daß** die spiralförmige Wicklung (2) um eine starre Spule (20) gebildet ist, die eine horizontale obere Platte (21), die im wesentlichen die Abmessungen der Öffnung des Hohlraums (16) besitzt, und eine horizontale untere Platte (22), die im wesentlichen die Innenabmessungen des Bodens (15) besitzt, aufweist, wobei die Platten durch ein vertikales mittiges schmales Element (24) und beiderseits hiervon durch zwei seitliche schmale Elemente (23, 25) verbunden sind, wobei die schmalen Elemente (23, 24, 25) zwei Öffnungen (26a, 26c) in der Mittelebene der Spule (20) und einen freien Raum (27) an ihrem Umfang für die Aufnahme der spiralförmigen Wicklung (2) begrenzen.

2. Prismaförmige Batterie nach Anspruch 1, **dadurch gekennzeichnet, daß** die Anschlußmittel (5, 6) in den Öffnungen (26a, 26c) angeordnet sind, die zwischen den schmalen Elementen (23, 24, 25) ausgebildet sind.

3. Prismaförmige Batterie nach den Ansprüchen 1 und 2, **dadurch gekennzeichnet, daß** die obere Platte (21) der Spule (20) außerdem Öffnungen (28a, 28c) aufweist, die zwischen dem mittigen schmalen Element (24) und jedem seitlichen schmalen Element (23, 25) ausgebildet sind, und **daß** die Anschlußmittel (5, 6) durch Metallstifte (30a, 30c) gebildet sind, die in ihrem Teil, der sich zwischen den beiden Platten (21, 22) befindet, abgeflacht sind und von der Spule (20) durch die Öffnungen (28a, 28c) nach außen vorstehen, um die Kontakte (7, 8) zu bilden.

4. Prismaförmige Batterie nach Anspruch 3, **dadurch gekennzeichnet, daß** die untere Platte (22) ebenfalls Öffnungen (29a, 29c) aufweist, die die Anordnung der Metallstifte (30a, 30c) ermöglichen.

5. Prismaförmige Batterie nach Anspruch 1, **dadurch gekennzeichnet, daß** die äußeren Ränder (23a, 25a) der seitlichen schmalen Elemente (23, 25) abgerundet sind, wobei der Krümmungsradius ausreicht, damit ein nicht zerstörender Durchgang der ersten Windungen der Wicklung (2) möglich ist.

6. Prismaförmige Batterie nach Anspruch 1, **dadurch gekennzeichnet, daß** die obere Platte (21) und die untere Platte (22) außerdem jeweils mit Positionierungsöffnungen (33, 35) versehen sind, die sich auf Höhe der seitlichen schmalen Elemente (23, 25) befinden und beiderseits der Mittelebene der Spule (20) angeordnet sind, wobei diese öffnungen (33, 35) dazu vorgesehen sind, Positionierungsstifte (31) aufzunehmen, die nach der Herstellung der Wicklung (2) herausgezogen werden müssen.

7. Prismaförmige Batterie nach Anspruch 1, **dadurch gekennzeichnet, daß** die Wicklung (2) aus einem einzigen Verbundwerkstoffband (10b) gebildet ist, das beiderseits eines ersten Trennelements (2b) zwei Träger (17a, 17c) aufweist, deren gegenüberliegende Flächen mit aktiven Werkstoffen (18a, 18c) beschichtet sind, die die Anode (2a) bzw. die Katode (2c) bilden, wobei die so gebildete Gesamtheit auf einer ihrer äußeren Oberflächen ein zweites Trennelement (2b) besitzt, und **daß** einerseits die Anode (2a), die Katode (2c) und das erste Trennelement (2b) auf derselben Seite der Spule (20) positioniert sind, wobei sie mit den Anschlußmitteln (5, 6) durch Löten und mit dem mittigen schmalen Element (24) durch Kleben fest verbunden sind, und andererseits das zweite Trennelement auf der anderen Seite der Spule (20) auf das mittige schmale Element (24) oder auf dasjenige der seitlichen schmalen Elemente (23 oder 25), das sich in der Richtung der Wicklung befindet, geklebt ist.

8. Prismaförmige Batterie nach Anspruch 1, **dadurch gekennzeichnet, daß** die Wicklung (2) aus zwei Verbundwerkstoffbändern (10d, 10d') gebildet ist, die die gleiche Struktur besitzen und beiderseits eines Trennelements (2b) zwei Träger (17a, 17c) aufweisen, deren gegenüberliegende Flächen mit aktiven Werkstoffen (18a, 18c) beschichtet sind, die die Anode (2a) bzw. die Katode (2c) bilden, und **daß** jedes Verbundwerkstoffband (10d, 10d') beiderseits der Spule (20) durch Löten an die entsprechenden Anschlußmittel (5, 6) für die Anode (2a) bzw. für die Katode (2c) und durch Kleben an das mittige schmale Element (24) für die Trennelemente (2b) befestigt ist, wobei die zwei Bänder (10d, 10d') in derselben Richtung gewickelt sind, um mit ihren nicht mit aktiven Werkstoffen (18a, 18c) beschichteten Flächen miteinander in Kontakt zu gelangen.

9. Prismaförmige Batterie nach Anspruch 1, **dadurch gekennzeichnet, daß** die Wicklung (2) aus zwei Verbundwerkstoffbändern (10a, 10c) gebildet ist, die analoge Strukturen besitzen, wobei das erste Band (10a) einen Träger (17a), der an seinen beiden Flächen mit einem die Anode (2a) bildenden aktiven Werkstoff (18a) beschichtet ist, und ein Trennelement (2b) umfaßt, die auf derselben Seite der Spule mit einem Anschlußmittel (5) durch Löten und mit dem mittigen schmalen Element (24) durch Kleben verbunden sind, und wobei das zweite Band (10c) einen Träger (17c), der auf seinen beiden Flächen mit einem die Katode (2c) bildenden aktiven Werkstoff (18c) beschichtet ist, und ein Trennelement (2b) umfaßt, die auf der anderen Seite der Spule mit dem zweiten Anschlußmittel (6) durch Löten und mit dem mittigen schmalen Element (24) durch Kleben fest verbunden sind, wobei die zwei Bänder (10a, 10c) in derselben Richtung gewickelt sind, damit sie sich einander gegenüber befinden.

10. Prismaförmige Batterie nach Anspruch 1, **dadurch gekennzeichnet, daß** die Breite der unteren Platte (22) der Spule (20) größer als jene der oberen Platte (21) ist, um ihre Einklemmung am Boden des Hohlraums (16) des Behälters (1) durch Hohlverformung der großen Wände (11, 13) zu ermöglichen.

11. Prismaförmige Batterie nach Anspruch 1, **dadurch gekennzeichnet, daß** die Spule (20) aus einem isolierenden Werkstoff hergestellt ist, der aus PBT (Polybuthylen-Terephthalat) und aus thermoplastischen oder wärmehärtbaren isolierenden Werkstoffen gewählt ist.

## Claims

1. Prismatic battery including a metal container (1) formed of at least two large walls (11, 13), two small walls (12, 14) and a bottom (15) delimiting a cavity (16) within which is arranged a non circular spiral winding (2) formed of at least one composite strip (10a, 10b, 10c, 10d) to form successive turns including an anode (2a) and a cathode (2c), separated by porous separators (2b), the assembly being impregnated by an electrolyte, said container (1) being sealed at its upper portion by a sealed cover (4) carrying two contact terminals (7, 8) electrically connected to the anode (2a) and the cathode (2c) via connection means (5, 6), **characterised in that** said spiral winding (2) is formed around a rigid spool (20) including a horizontal upper flange (21), having substantially the dimensions of the opening of the cavity (16), and a horizontal lower flange (22), having substantially the inner dimensions of the bottom (15), said flanges being joined by a vertical central neck (24) and, on either side, by two lateral necks (23, 25), said necks (23, 24, 25) delimiting two openings (26a, 26c) in the median part of the spool (20) and a free space (27) at its periphery to accommodate the spiral winding (2).

2. Prismatic battery according to claim 1, **characterised in that** the connection means (5, 6) are arranged in the openings (26a, 26c) arranged between the necks (23, 24, 25).

3. Prismatic battery according to claims 1 and 2, **characterised in that** the upper flange (21) of the spool (20) further includes orifices (28a, 28c), arranged between the central neck (24) and each lateral neck (23, 25), and **in that** the connection means (5, 6) are formed by metal rods (30a, 30c), flattened in the portion thereof comprised between the two flanges (21, 22) and projecting from the exterior of the spool (20) through said orifices (28a, 28c) to form the contact terminals (7, 8).

4. Prismatic battery according to claim 3, **characterised in that** the lower flange (22) also includes orifices (29a, 29c) allowing the metal rods (30a, 30c) to be positioned.

5. Prismatic battery according to claim 1, **characterised in that** the outer edges (23a, 25a) of the lateral necks (23, 25) are rounded along a sufficient radius of curvature to allow passage of the first turns of the winding (2) without the destruction thereof.

6. Prismatic battery according to claim 1, **characterised in that** the upper flange (21) and the lower (22) are further respectively provided with positioning orifices (33, 35) situated at the lateral necks (23, 25) and arranged on either side of the median part of the spool (20), said orifices (33, 35) being provided to accommodate the positioning rods (31) which have to be removed after coiling the winding (2).

7. Prismatic battery according to claim 1, **characterised in that** the winding (2) is formed of a single composite strip (10b) including on either side of a first separator (2b) two supports (17a, 17c) whose facing sides are coated with active materials (18a, 18c) forming respectively the anode (2a) and the cathode (2c), the assembly thereby formed having a second separator (2b) on one of its external surfaces, and **in that** on the one hand, the anode (2a), the cathode (2c) and the first separator (2b) are positioned on a same side of the spool (20) being attached respectively to the connection means (5, 6) by welding and to the central neck (24) by bonding, and on the other hand, the second separator is bonded to the other side of the spool (20) onto the central neck (24), or onto that of the lateral necks (23, 25) situated in the direction of the winding.

8. Prismatic battery according to claim 1, **characterised in that** the winding (2) is formed of two composite strips (10d, 10d') having the same structure and including on either side of a separator (2b) two supports (17a, 17c) whose facing sides are coated with active materials (18a, 18c) forming respectively the anode (2a) and the cathode (2c) and **in that** each composite strip (10d, 10d') is fixed on either side of the spool (20) by welding to the respective connection means (5, 6) for the anode (2a) and the cathode (2c) and by boding onto the central neck (24) for the separators (2b), the two strips (10d, 10d') being coiled in the same direction to come into contact with each other via their sides which are not coated with active materials (18a, 18c).

9. Prismatic battery according to claim 1, **characterised in that** the winding (2) is formed of two composite strips (10a, 10c) having the same structure, the first strip (10a) including a support (17a), coated on both sides with an active material (18a) forming the anode (2a), and a porous separator (2b) attached on the same side of the spool respectively to a connection means (5) by welding and to the central neck (24) by bonding, and the second strip (10c) including a support (17c), coated on both faces with an active material (18c) forming the cathode (2c), and a separator (2b) attached on the other side of the spool respectively to the second connection means (6) by welding and to the central neck (24) by bonding, the two strips (10a, 10c) being coiled in the same direction to come to face each other.

10. Prismatic battery according to claim 1, **characterised in that** the width of the lower flange (22) of the spool (20) is greater than that of the upper flange (21) to allow the gripping thereof at the bottom of the cavity (16) of the container (1) by recessing the large walls (11, 13).

11. Prismatic battery according to claim 1, **characterised in that** the spool (20) is made of an insulating material selected from among PBT (polybutylene terephtalate) and thermoplastic or thermo-setting insulating materials.
